# EUROPÄISCHE PATENTANMELDUNG

(11) **EP 0 720 406 A2**
(43) Veröffentlichungstag der Anmeldung: **03.07.1996**
(21) Anmeldenummer: 95119506.4
(22) Anmeldetag: 11.12.1995
(51) Int. Cl.: H04Q 7/38, H04Q 7/22

(54) **Verfahren zur Unterstützung des Verbindungsaufbaus zu einem an ein programmgesteuertes Kommunikationssystem angeschlossenen Mobilendgerät**

(30) Priorität: 27.12.1994 DE 4446810
(71) Anmelder: SIEMENS AKTIENGESELLSCHAFT, D-80333 München (DE)
(72) Erfinder: Vanlandeghem, Marc, Ing., B-09800 Deinze (BE); Glas, Jose, Ing., B-09853 Deinze (BE)

(57) **Zusammenfassung**

Mit Beginn der Erreichbarkeit eines Mobilendgerätes wird aufgrund der zu diesem Zeitpunkt übertragenen Information ein entsprechendes Kennzeichen im Kommunikationssystem abgespeichert. Ist dieses Kennzeichen nicht vorhanden, so unterbleibt bei einem Verbindungswunsch ein Verbindungsaufbauversuch zu dem betreffenden Endgerät. Das abgespeicherte Kennzeichen wird gelöscht, wenn bei einer Gesprächsverbindung eine Auslösemeldung mit einer, den Austritt aus dem Sendebereich definierenden Kennung empfangen wird. Die Löschung dieses Kennzeichens erfolgt auch dann, wenn ein Verbindungsversuch nicht zum Erfolg führt. Es werden damit Betriebsfälle für das Mobilendgerät erfaßt, bei denen keine entsprechende Negativkennung übermittelt wird (z.B. Mobilendgerät ausgeschaltet, Batterie nicht geladen). Durch die Auswertung des Kennzeichens über die bestehende Erreichbarkeit ergibt sich für anrufende Teilnehmer ein Zeitgewinn. Sind mehrere Funkvermittlungseinheiten (Basisstation) vorhanden, so beinhaltet dieses Kennzeichen gleichzeitig eine Aussage, in welchem Funkvermittlungsbereich sich das betreffende Mobilendgerät befindet.

## Beschreibung

Die Erfindung betrifft ein Verfahren zur Unterstützung des Verbindungsaufbaus zu einem Mobilendgerät, das dem Teilnehmerfeld eines an ein programmgesteuertes Kommunikationssystem angeschlossenen, durch mindestens eine Funkvermittlungseinheit realisierten drahtlosen Übertragungssystem zugehörig ist, wobei das Kommunikationssystem ein die Vermittlung, Signalisierung und die Leistungsmerkmale steuerndes Mikroprozessorsystem aufweist, das durch einen es repräsentierenden Mikroprozessor und durch unter anderem anschluß- und gerätebezogene Informationen speichernden Speichereinheiten gebildet ist und die Funktionskomponenten bzw. Schnittstellen des Kommunikationssystems an ein durch Adreß-, Daten- und Steuerleitungen gebildetes lokales Bussystem angeschlossen sind und die Mobilendgeräte zumindest teilweise entsprechend den drahtgebundenen Endgeräten in das Leistungsmerkmalsspektrum des Kommunikationssystems einbezogen sind.

Ein solches programmgesteuertes Kommunikationssystem besteht im Prinzip aus einer Vielzahl vermittlungstechnischer Funktionseinheiten und einem programmierbaren digitalen Rechnersystem, das diese Funktionseinheiten steuert und alle vermittlungstechnischen Abläufe überwacht. Zu diesem Zweck wird es mit Informationen über den jeweiligen Betriebszustand der Funktionseinheiten und über Zustandsänderungen, insbesondere über Eingaben an den an das Kommunikationssystem angeschlossenen Endgeräten, informiert. Es kann deshalb bei Bedarf umgehend entsprechende Steueranweisungen und Meldungen erstellen und ausgeben.

Derartige Kommunikationssysteme sind neben der erforderlichen Vermittlungssteuerung auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei insbesondere für den Kommunikationsdienst "Sprache" eine große Zahl unterschiedlicher Leistungsmerkmale bekannt ist.

Um die telefonische Erreichbarkeit bestimmter Teilnehmer, insbesondere Teilnehmer eines privaten Kommunikationssystems, auch dann sicherzustellen, wenn sie beispielsweise innerhalb eines Gebäudes und/oder eines zugehörigen Außenbereiches unterwegs sind, ist es bekannt, an das betreffende Kommunikationssystem Mobilendgeräte anzuschließen. Die Kommunikation wird dabei über den Funkweg ermöglicht. Dies erfolgt über mindestens eine Funkvermittlungseinheit (Basisstation), deren anlagenseitiger Anschluß hinsichtlich der verwendeten Hardware-Komponenten in der Regel auf den übrigen Teilnehmeranschlußmodulen basiert. In einer solchen Funkvermittlungseinheit werden die für die Kommunikation mit den Mobilendgeräten erforderlichen Prozeduren und Protokolle abgewickelt. Sie hat Zugriff auf eine Mehrzahl von Mobilendgeräten. Von diesen Mobilendgeräten können, gegebenenfalls mit gewissen Einschränkungen, die für die übrigen angeschlossenen Endgeräte in Anspruch zu nehmenden Leistungsmerkmale gleichfalls genutzt werden. Für einen gewünschten Verbindungsaufbau zu einem bestimmten Mobilendgerät wird eine freie Funkvermittlungseinheit entsprechend aktiviert. Dem Übertragungssystem stehen für die Funkverbindung eine bestimmte Anzahl von Kanalpaaren zur Verfügung. Für eine Verbindungsherstellung tastet jede Funkvermittlungseinheit und jedes Mobilendgerät diese Kanalpaare zyklisch ab. Eine bestimmte Anzahl von störungsfreien Kanälen werden als Vorzugskanäle laufend auf einen Belegungswunsch hin abgefragt. Diese Vorzugskanaltabelle wird während des Betriebes auf ihre Richtigkeit geprüft und im Bedarfsfalle aktualisiert. Für einen Suchvorgang nach dem angeforderten Mobilendgerät ist eine bestimmte maximale Suchzeit vorgegeben. Ein Suchvorgang wird dann nach Ablauf dieser Suchzeit von beispielsweise 10 Sekunden abgebrochen. Bei einem erfolglosen Suchvorgang wird also immer diese gesamte Zeit in Anspruch genommen. Ein Suchvorgang ist immer dann erfolglos, wenn das betreffende Mobilendgerät sich beispielsweise außerhalb des räumlichen Erreichbarkeitsgebietes befindet. Die Nichterreichbarkeit ist z.B. auch dann gegeben, wenn der Betriebsschalter des Mobilendgerätes in "Aus"-Stellung liegt oder über die eingesetzten Batterien die Stromversorgung nicht mehr sichergestellt werden kann.

Es ist die Aufgabe der Erfindung, die Verbindungsaufbauprozedur zu einem Mobilendgerät effektiver zu gestalten.

Diese Aufgabe wird durch die Merkmale des Anspruches 1 gelöst. Durch die Tatsache, daß eine Information über die Erreichbarkeit eines jeden Mobilendgerätes zusätzlich abgespeichert ist, werden Zeitverluste durch erfolglose Verbindungsversuche minimiert. In den Fällen, in denen eine Information über die zeitweilige Nichterreichbarkeit eines im System angemeldeten Mobilendgerätes vorhanden ist, wird ein Verbindungswunsch unmittelbar als nicht durchführbar abgewiesen. Es ist also keine sukzessive Überprüfung erforderlich, um festzustellen, ob das betreffende Mobilendgerät im vorgegebenen Funkbereich noch betriebsbereit ist. Durch diesen Verzicht auf eine sich periodisch wiederholende Anwesenheitskontrolle wird also die zusätzliche Belastung der Versorgungsbatterie des Endgerätes vermieden. Es kann also erfindungsgemäß grundsätzlich die mögliche Erreichbarkeit eines Mobilendgerätes vorab abgefragt werden.

Erfindungsgemäß wird die mobilendgeräteindividuelle Erreichbarkeitsinformation dann gelöscht, wenn entweder bei einer aktuell bestehenden Gesprächsverbindung diese über eine vorgegebene kurze Zeitspanne hinaus unterbrochen ist oder wenn ein Verbindungsaufbauversuch zu dem betreffenden Mobilendgerät erfolglos ist.

Weitere vorteilhafte Ausgestaltungen der Erfindung sind den restlichen Unteransprüchen zu entnehmen.

Die Erfindung wird im folgenden anhand eines schematisch dargestellten Ausführungsbeispiels näher erläutert.

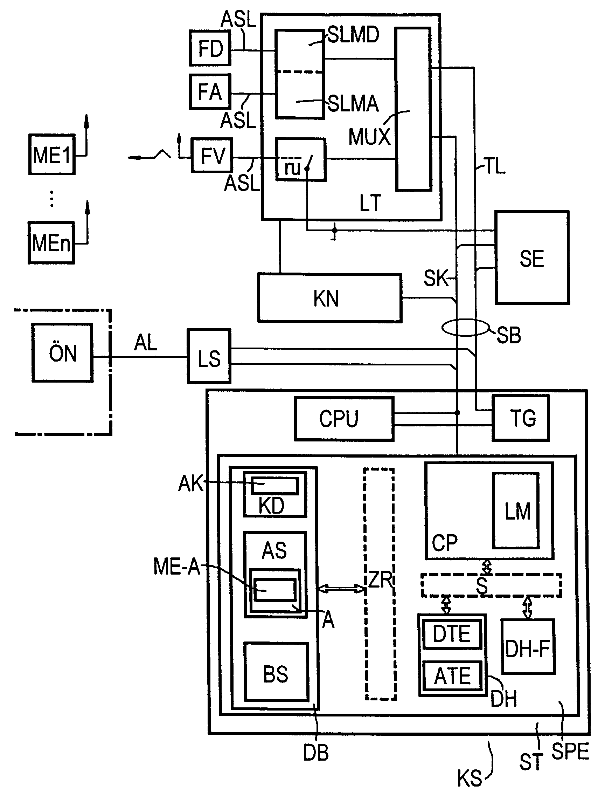

Zentraler Bestandteil der in der Figur als schematische Blockdarstellung gezeigten privaten Kommunikationssystem (Nebenstellenanlage) KS ist das Koppelnetz KN, über das Endgeräte - von denen die Fernsprechendgeräte FD bzw. FA schematisch angedeutet sind - miteinander bzw. mit zu einer öffentlichen Vermittlungsanlage ÖN führenden Leitung AL verbindbar sind. Weiterhin ist mindestens eine Funkvermittlungseinheit FV anschließbar, die unter Einbeziehung des Kommunikationssystems eine drahtlose Kommunikation unter Einbeziehung der Mobilendgeräte ME1...MEn ermöglicht.

Das Koppelnetz KN steht unter dem Steuereinfluß einer zentralen Steuerung ST, die neben dem zentralen Prozessor CPU eine Speichereinrichtung SPE und eine Takteinheit TG enthält. Der zentrale Prozessor CPU steuert sämtliche Vermittlungsvorgänge und besorgt eine Aufbereitung und Zuteilung der Steuerdaten. Diese Aufgaben können auch auf mehrere Prozessoren aufgeteilt werden. Im Kommunikationssystem KS sind Leitungsanschlußeinrichtungen angeordnet. Stellvertretend ist eine Leitungsanschlußeinrichtung LT angedeutet. Diese Leitungsanschlußeinrichtungen enthalten Teilnehmeranschlußmodule SLM, die über Teilnehmeranschlußleitungen ASL jeweils mit den Kommunikationsendgeräten bzw. mit einer Funkvermittlungseinheit FV verbunden sind. Es können prinzipiell zwei unterschiedliche Teilnehmeranschlußmodule vorgesehen sein. Anschlußmodule SLMD dienen für den Anschluß digitaler Kommunikationsendgeräte FD und Teilnehmeranschlußmodule SLMA für den Anschluß analoger Kommunikationsendgeräte FA bzw. für den Anschluß einer Funkvermittlungseinheit FV. Das Teilnehmeranschlußmodul SLMA für analoge Kommunikationsendgeräte stellt das Bindeglied zwischen diesen analogen Endgeräten, z.B. Fernsprechendgeräte FA und dem Kommunikationssystem KS, dar. Dieses Teilnehmeranschlußmodul enthält beispielsweise Einrichtungen für den Anschluß einer vorgegebenen Anzahl von Teilnehmeranschlußleitungen ASL. Jedes Teilnehmeranschlußmodul ist mit den notwendigen Speise-, Ruf- und Indikationsschaltungen sowie mit Zweidraht-Vierdraht-Wandlern und bei einer anlageninternen digitalen Sprachverarbeitung mit Analog-/Digital- bzw. Digital-/Analog-Wandlern für die Sprachinformationsumsetzung ausgestattet. Die digitalen bzw. digitalisierten Sprachinformationen werden über eine Multiplexeinrichtung MUX dem z.B. digitalen Koppelnetz KN zugeführt.

Die Teilnehmeranschlußeinheit SLMD ist für den Anschluß von digitalen Kommunikationsendgeräten FD vorgesehen und stellt das Bindeglied zwischen ISDN-Kommunikationsendgerät und dem Kommunikationssystem KS dar. Eine Anschlußeinheit SLMD ist für den Anschluß einer bestimmten Anzahl von digitalen Kommunikationsendgeräten vorhanden. Die Nachrichtenübertragung erfolgt hierbei z.B. über Nachrichtenkanäle und die Signalisierung wird über einen zusätzlichen Kanal übermittelt. Die vom Kommunikationsendgerät FD gelieferten digitalen Sprachinformationen werden ebenfalls über die Multiplexeinrichtung MUX zum Koppelnetz KN weitergegeben.

Der Zugriff zu einer Amtsleitung AL, über die - gegebenenfalls als eine von mehreren - das Kommunikationssystem KS beispielsweise mit dem öffentlichen Netz ÖN verbunden ist, erfolgt über die Schnittstelle LS. Diese Schnittstelle beinhaltet beispielsweise einen ISDN-Teil, der z.B. als standardisierte S0-Schnittstelle ausgebildet sein kann. Die Peripherie des Kommunikationssystems KS wird ergänzt durch eine Signalisierungseinheit SE, die unter anderem zur Zeichenversorgung des Kommunikationssystems vorhanden ist.

Vermittlungstechnisch gesteuert werden die Leitungsanschlußeinrichtungen LT von der Systemsteuerung ST. Hierbei ist jede Leitungsanschlußeinrichtung über einen Signalisierungskanal SK mit der Anlagensteuerung verbunden. Über diesen Signalisierungskanal SK werden die Informationen mit Hilfe der bekannten HDLC-Übermittlungsprozedur ausgetauscht. Die in der Systemsteuerung ST generierten Taktsignale werden über eine Taktleitung TL an die Leitungsanschlußeinrichtungen LT verteilt. Das zur Verfügungstellen der Taktsignale wird durch die Einheit TG symbolisiert. Der Signalisierungskanal SK und die Taktleitung TL ist Teil eines Systembusses SB.

Der Prozessor CPU der Systemsteuerung ST hat Zugriff zu den in der Speichereinrichtung SPE abgelegten Informationen. Der Speicher enthält eine Datenbasis DB in der im Speicherteil KD die Kundendaten abgelegt sind. Diese betreffen beispielsweise die den einzelnen Endgeräten FA bzw. FD zugeteilten Berechtigungen ebenso wie die den Mobilendgeräten ME1...MEn zugeteilten Berechtigungen und die Anlagenkonfiguration AK. Die Datenbasis enthält das Betriebssystem BS, das die für das Kommunikationssystem KS typische Vielzahl von quasi gleichzeitig anfallenden und auch zu erledigenden Einzelaufgaben koordiniert. Seine wesentliche Aufgabe besteht darin, in Abhängigkeit von eingetroffenen oder in der Systemsteuerung intern gebildeten Anreize dem Prozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Systemspeicher SPE hinterlegt ist. Neben den von den angeschlossenen Endgeräten übermittelten Anreizen werden auch in den verschiedenen vermittlungstechnischen Einheiten, wie z.B. in den Leitungsanschlußeinheiten LT, im Koppelnetz KN, usw., also innerhalb des Kommunikationssystems, Anreize erzeugt.

Daten, die während eines durch ein Kommunikationsendgerät initiierten Verbindungsaufbaus aus der Datenbasis abgefragt werden, können zumindest teilweise in den Arbeitsspeicher AS übernommen werden. Dieser Arbeitsspeicher dient unter anderem der Aufnahme von temporären Daten zur Programmablaufsteuerung.

Grundsätzlich weist die in der FIG angedeutete Basisstruktur der Steuerung eines digitalen Nebenstellen-Kommunikationssystems KS einen modularen Charakter auf und es sind zumindest zwei hierarchische Ebenen der Programmsteuerung vorhanden. Eine von ihnen dient mittels jeweils an eine bestimmte Endgeräteart angepaßten Leitungsprogrammodulen DH zur Steuerung peripherer Geräte. Jedes dieser Programmodule DH bietet eine systemeinheitliche Schnittstelle zur Vermittlungstechnik-Strukturebene, die im vorliegenden Fall durch ein Vermittlungsprozedur-Programmodul CP repräsentiert ist. In der Leitungstechnik-Strukturebene sind den einzelnen Endgerätearten zugeordnete Programmodule DTE für digitale Endgeräte und ATE für analoge Endgeräte im Programmodule DH angedeutet. Des weiteren ist ein Programmodul DH-F dargestellt, in dem die im Zusammenhang mit den Mobilendgeräten ME1...MEn stehenden Anreize aufgenommen und in bestimmter Weise behandelt werden. Der Informationsaustausch zwischen der Leitungstechnik-Strukturebene und der Vermittlungstechnik-Strukturebene erfolgt mittels definierter Meldungen, die beispielsweise über eine strichliert angedeutete Software-Busstruktur übertragen werden. Diese kann als integraler Bestandteil des Betriebssystems BS angesehen werden. Die Programmodule der beiden genannten Steuerungsebenen haben mittels Datenbasis-Zugriffsroutinen Zugang zur Datenbasis DB des Kommunikationssystems. Das Vorhandensein derartiger Zugriffsroutinen ist durch den strichliert dargestellten Block ZR angedeutet.

Die Aufgaben des Vermittlungsprozedur-Programmoduls CP umfassen beispielsweise die für die Steuerung des Verbindungsaufbaus und des Verbindungsabbaus notwendigen Teilprozesse der gesamten Vermittlungsprozedur. So werden z.B. Berechtigungen geprüft und Wahlbewertungsprozeduren durchgeführt. Es erfolgt auch eine Signalisierung von vermittlungstechnischen Zuständen zwischen den Kommunikationsendgeräten und es ist ein Aktivieren und ein Deaktivieren von VermittlungstechnikLeistungsmerkmalen aus den unterschiedlichen vermittlungstechnischen Zuständen heraus durchführbar. Stellvertretend für die im Nebenstellen-Kommunikationssystem KS insgesamt vorgesehenen Leistungsmerkmal-Programmodulen ist das Modul LM gezeigt.

Um für eine bestimmte Anzahl von Nebenstellenteilnehmern die telefonischen Verbindungsmöglichkeiten zu erhöhen und eine Erreichbarkeit auch dann sicherzustellen, wenn sie nicht am Arbeitsplatz sind, können Mobilendgeräte ME1...MEn eingesetzt werden. Jedes dieser Mobilendgeräte ist jeweils auf drahtlosem Wege über mindestens eine Funkvermittlungseinheit FV erreichbar. Jede dieser Funkvermittlungseinheiten ist für den Aufbau und die Durchführung von Gesprächsverbindungen zuständig. Es können beispielsweise mindestens zwei Funkvermittlungseinheiten derart benachbart angeordnet sein, daß sie den gleichen Funkbereich abdecken und somit für die Teilnehmer des in dem Nebenstellen-Kommunikationssystem KS integrierten drahtlosen Übertragungssystems eine erhöhte Erreichbarkeit besteht. Diese Funkvermittlungseinheiten können auch örtlich getrennt voneinander plaziert sein, so daß die Funkreichweite insgesamt vergrößert wird. Sinnvollerweise sieht man dann eine Überlappung der einzelnen Funkbereiche vor. In der jeweils angeschlossenen Funkvermittlungseinheit FV werden die für die Kommunikation mit den Mobilendgeräten ME erforderlichen Prozeduren und Protokolle abgewickelt. Für einen gewünschten Verbindungsaufbau zu einem Mobilendgerät ME wird eine freie Funkvermittlungseinheit entsprechend aktiviert. Dem Übertragungssystem stehen für die Funkverbindungen eine bestimmte Anzahl von Kanalpaaren zur Verfügung. Für eine Verbindungsherstellung tastet jede Funkvermittlungseinheit und jedes Mobilendgerät diese Kanalpaare zyklisch ab. Eine bestimmte Anzahl von störungsfreien Kanälen werden als "Vorzugskanäle" laufend auf einen Belegungswunsch hin abgefragt. Diese Vorzugskanaltabelle wird während des Betriebes auf ihre Richtigkeit geprüft und eventuell aktualisiert. Durch die implementierten Suchalgorithmen wird sichergestellt, daß für das von mehreren Funkvermittlungseinheiten gesuchte Mobilendgerät die beste Gesprächsgüte vermittels derjenigen Funkvermittlungseinheit erreicht wird, die sich als erste meldet. Dieses Melden erfolgt durch das Aussenden eines vorgegebenen Meldekriteriums. Ein Suchvorgang nach einem Mobilendgerät wird nach einer vorgegebenen Anzahl von Versuchen, die jeweils eine bestimmte Suchzeit beinhalten, abgebrochen. Bei einer solchen erfolglosen Suche wird also immer die gesamte hierfür vorgesehene Zeit in Anspruch genommen. Eine solche erfolglose Suche infolge der nicht mehr gegebenen Erreichbarkeit ergibt sich beispielsweise immer dann, wenn das betreffende Mobilendgerät sich außerhalb des räumlichen Erreichbarkeitsbereiches befindet oder wenn beispielsweise über die in ihm vorhandenen Batterien die Stromversorgung nicht mehr sichergestellt werden kann. Es könnte auch der Betriebsschalter in Ausstellung gebracht worden sein.

Erfindungsgemäß wird ein gewünschter Suchvorgang grundsätzlich nur dann eingeleitet, wenn vorab die mögliche Erreichbarkeit dieses Mobilendgerätes überprüft wird. Zu diesem Zweck wird in einem als dynamische Datenbasis für die einzelnen Mobilendgeräte ME1...MEn anzusehenden Speicherbereich A des Arbeitsspeichers als entsprechende Statusinformation ein Erreichbarkeits-Bit ME-A abgespeichert. Wird ein Mobilendgerät eingeschaltet oder erreicht es den Empfangsbereich der Funkvermittlungseinheit, so liefert es eine entsprechende Information an die Funkvermittlungseinheit FV, die diese an das Kommunikationssystem weiterreicht. In einem solchen Fall wird dann in dem Speicherbereich A das Erreichbarkeitsbit gesetzt, so daß vor jeder Verbindungsanforderung überprüft werden kann, daß das Mobilendgerät tatsächlich lokalisiert ist. Das Mobilendgerät empfängt zunächst eine entsprechende Anfrageinformation über die Funkstrecke von der Funkvermittlungseinheit. Derartige Anfrageinformationen werden von dieser ständig ausgesendet, während das Mobilendgerät eine derartige Anfrage nur einmal zu Beginn seiner jeweiligen Erreichbarkeit beantwortet. Durch das Mobilendgerät selbst erfolgt eine Anfrage auf Zulassung. Das bedeutet, daß in der Funkvermittlungseinheit eine Identifizierung und eine entsprechende Berechtigungsprüfung vorgenommen wird. Bei einem positiven Ergebnis wird die Abspeicherung des Erreichbarkeitsbits ME-A für das betreffende Mobilendgerät vorgenommen. Wird beispielsweise durch einen Teilnehmer ein anderer Teilnehmer angewählt, so wird zunächst überprüft, ob das betreffende Bit für diesen anderen Teilnehmer gesetzt ist. Ist dies der Fall, so wird zu der zuständigen Funkvermittlungseinheit FV die entsprechende Anrufinformation übermittelt und dem anrufenden Teilnehmer durch die Vermittlungstechnik der Freiton angeschaltet. Von der Funkvermittlungseinheit wird der Teilnehmer gegebenenfalls in mehreren Versuchen gesucht. Ist der betreffende Teilnehmer gefunden, so wird eine entsprechende Information an das Kommunikationssystem geliefert und eine Rufinformation zu dem gewünschten Mobilendgerät über die Funkvermittlungseinheit gesendet. Das Mobilendgerät ME quittiert diesen Anruf mit einer Meldung "Alert", die besagt, daß das Mobilendgerät gerufen wird. Die Anschaltung des Freitons zum rufenden Teilnehmer bleibt erhalten. Wird ein Anruf nicht mit dieser Meldung "Alert" quittiert, dann bedeutet dies, daß entweder der Schalter in Ausstellung liegt oder die Batterie nicht mehr eine ausreichende Versorgungsspannung zur Verfügung stellt. In einem solchen Fall wird dann das für das betreffende Mobilendgerät abgespeicherte Erreichbarkeitsbit ME-A zurückgesetzt. Wird das betreffende Mobilendgerät wieder eingeschaltet, macht es sich dem System gegenüber wieder bekannt. Das hat dann zur Folge, daß dieses Erreichbarkeitsbit erneut gesetzt wird. Um die Batterie nicht zu belasten, wird in den genannten Fällen keine entsprechende Meldung abgeleitet. Dies würde nämlich voraussetzen, daß ständig ein wechselseitiger Informationsaustausch zwischen der Basisstation und dem Mobilendgerät erfolgen müßte. Da jedoch die Funkvermittlungseinheit FV ständig Informationssignale aussendet, besteht für das Mobilendgerät die Möglichkeit, beim Einschalten oder beim Eintritt in den Empfangsbereich der Funkvermittlungseinheit einmal zur Dokumentation seines empfangsbereiten Zustandes eine entsprechende Information auszusenden. Diese führt dann - wie bereits erwähnt - zum Einspeichern des Erreichbarkeitsbits ME-A für das betreffende Mobilendgerät. Wird das Mobilendgerät ME im nichtaktiven Zustand aus dem Sendebereich der Funkvermittlungseinheit FV bewegt, so führt dies gleichfalls zu keiner entsprechenden Information für die Funkvermittlungseinheit. Das bedeutet, daß im Kommunikationssystem das Erreichbarkeitsbit weiterhin gespeichert bleibt. Zur Änderung dieser Information wird der nächste Anruf für das betreffende Mobilendgerät abgewartet. Ein solcher Verbindungswunsch führt nach der vorgesehenen Anzahl von Verbindungsversuchen demnach nicht zum Erfolg. Aufgrund dieser Tatsache wird dann die Löschung des bis dahin eingespeicherten Erreichbarkeitsbits veranlaßt. Bei Nichtauffinden des gewünschten Teilnehmers wird nach dieser vorgesehenen Anzahl von beispielsweise drei Versuchen ein Sonderbesetztton zum anfordernden Teilnehmer ausgesendet.

Dieser Sonderbesetztton zum anfordernden Teilnehmer wird auch immer dann ausgesendet, wenn bei der vorab erfolgenden Überprüfung des dem jeweiligen Mobilendgerät zugeordneten Speicherplatzes im Speicherteil A festgestellt wird, daß das Erreichbarkeitsbit ME-A nicht gesetzt ist.

Um zu vermeiden, daß im Netz eines Unternehmens über alle Funkvermittlungseinheiten dasselbe Mobilendgerät gesucht wird, kann die im Erreichbarkeitsbit enthaltene Information dahingehend erweitert werden, daß sie gleichzeitig eine Aussage darüber liefert, wo sich das betreffende Mobilendgerät gerade aufhält.

Wird das Mobilendgerät während eines bestehenden Gesprächszustandes außerhalb des Sende- bzw. des Empfangsbereiches der Funkvermittlungseinheit FV bewegt, dann wird eine entsprechende Auslösemeldung zum Kommunikationssystem übermittelt. Diese Auslösemeldung beinhaltet eine Kennung, die aussagt, daß das Mobilendgerät sich außerhalb des Sendebereiches befindet. Das jeweilige mobilendgeräteindividuelle Erreichbarkeitsbit ME-A wird daraufhin zurückgesetzt. Diese Zurücksetzung wird nicht unmittelbar nach der Unterbrechung der bestehenden Gesprächsverbindung veranlaßt, sondern es wird eine Toleranzzeit von einigen Sekunden dabei berücksichtigt. Es bleiben also kurze Unterbrechungen, die beispielsweise aufgrund einer Beeinflussung des Funkfeldes durch metallische Gegenstände verursacht sind, außer Betracht. Das mobilendgeräteindividuelle Erreichbarkeitsbit könnte auch in dem für die Schnurlostelefone zuständigen Modul DH-F abgespeichert werden.

Durch die Tatsache, daß der Speicherplatz auf das Vorhandensein des Erreichbarkeitsbits hin vorab überprüft wird, ergibt sich also bei einer fehlenden Bitinformation ein Zeitgewinn für den anrufenden Teilnehmer. Er erhält nämlich dann sofort eine negative Quittung. Es erfolgt dann auch keine Inanspruchnahme einer Funkvermittlungseinheit. Weiterhin werden in den Fällen, in denen mehrere Anrufe im Bereich einer Funkvermittlungseinheit anstehen, von vornherein keine Aufträge für solche Mobilendgeräte in einer sogenannten Warteschlange abgespeichert, die nicht "aktiv" sind.

Bezüglich eines angeforderten Fernsprechendgerätes können Rückrufaufträge in Form eines "Rückrufauftrages im Besetztfall" und in Form eines "Rückrufauftrages im Freifall" eingegeben werden. Das bedeutet, daß im ersten Beispiel ein Rückruf durch die Systemsteuerung dann ausgeführt wird, wenn ein Teilnehmer den Besetztfall beendet. Im zweiten Beispiel wird der Rückrufauftrag durch die Systemsteuerung ausgeführt, nachdem der Teilnehmer an seinem Fernsprechendgerät aktiv geworden ist. Mit Bezug auf Mobilendgeräte wird nun ein Rückrufauftrag immer im Sinne eines Rückrufs im Freifall behandelt. Damit wird dann vermieden, daß ein Verbindungsversuch gestartet wird, wenn nach einer Rückrufeingabe im Besetztfall das Mobilendgerät außerhalb des Sendebereiches bewegt wurde. Das Mobilendgerät ist in einer solchen Situation weiterhin als erreichbar gekennzeichnet. Ein eingeleiteter Rückruf würde jedoch erfolglos bleiben. Gelangt das Mobilendgerät wieder in den Sende- bzw. Empfangsbereich der Funkvermittlungseinheit, so wird - wie bereits erläutert - durch das Mobilendgerät eine entsprechende Meldung abgesetzt. Das Erreichbarkeitsbit wird wieder gesetzt und es wird der Rückruf im Sinne eines "Rückrufes im Freifall" ausgeführt.

Für den Anschluß einer Funkvermittlungseinheit FV dient z.B. eine zweiadrige Anschlußleitung ASL, wobei beispielsweise anlagenseitig eine für den Anschluß analoger Endgeräte benutzte Schnittstelleneinheit vorhanden ist. Der Kriterienaustausch zwischen dem Kommunikationssystem KS und der über ein Anschlußmodul und die analoge Anschlußleitung angeschlossenen Funkvermittlungseinheit erfolgt durch das Anlegen beispielsweise von Rufwechselspannungssignalen über den angedeuteten Kontakt ru. Der Kriterienaustausch kann weiterhin durch die Benutzung von Mehrfrequenzcode-Signalen und durch das Abschalten der Speisespannung für eine definierte Zeit, um beispielsweise Auslösevorgänge zu initiieren, erfolgen. Der Kriterienaustausch in dazu umgekehrter Richtung erfolgt z.B. durch das ein Beginn- bzw. Endekennzeichen repräsentierende Schließen bzw. Öffnen der Leitungsschleife und durch die Übermittlung von Mehrfrequenzcode-Signalen auf der Anschlußleitung.

Der Anschluß der Funkvermittlungseinheit, die als Funkserver betrachtet werden kann, ist auch in digitaler Technik zu realisieren. Dieser Funkserver ermöglicht beispielsweise die Kommunikation mit Mobilendgeräten auf der Basis des sogenannten DECT-Standards. Der Anschluß an das Kommunikationssystem erfolgt über ein entsprechend ausgebildetes Interface.

## Patentansprüche

1. Verfahren zur Unterstützung des Verbindungsaufbaus zu einem Mobilendgerät (ME), das dem Teilnehmerfeld eines an ein programmgesteuertes Kommunikationssystem (KS) angeschlossenen durch mindestens eine Funkvermittlungseinheit (FV) realisierten drahtlosen Übertragungssystem zugehörig ist, wobei das Kommunikationssystem ein die Vermittlung, Signalisierung und die Leistungsmerkmale steuerndes Mikroprozessorsystem aufweist, das durch einen es repräsentierenden Mikroprozessor (CPU) und durch u.a. anschluß- und gerätebezogene Informationen speichernden Speichereinheiten (SPE) gebildet ist und die Funktionskomponenten bzw. Schnittstellen des Kommunikationssystems an ein durch Adress-Daten- und Steuerleitungen gebildetes lokales Bussystem angeschlossen sind und die Mobilendgeräte (ME1...MEn) zumindest teilweise entsprechend den drahtgebundenen Endgeräten in das Leistungsmerkmalspektrum des Kommunikationssystems einbezogen sind,
**dadurch gekennzeichnet,**
daß zumindest mit Beginn der Empfangsbereitschaft eines jeden angemeldeten Mobilendgerätes an die jeweils mit ihm kommunizierende Funkvermittlungseinheit (FV) eine entsprechende Signalinformation übermittelt und von dieser über ihre Anschlußleitung (ASL) an die Systemsteuerung weitergegeben wird, daß aufgrund dieser Signalinformation eine mobilendgeräteindividuelle Information (ME-A) über seine aktuelle Erreichbarkeit abgespeichert wird, daß bei der im Rahmen einer bestehenden Gesprächsverbindung oder eines Verbindungsversuches vorgenommenen Feststellung der nicht mehr bestehenden oder nicht möglichen Erreichbarkeit die genannte mobilendgeräteindividuelle Information entsprechend geändert wird, daß bei einer Verbindungsanforderung zunächst der betreffende Speicherplatz bezüglich dieser Information abgefragt wird, daß bei nicht vorhandener Erreichbarkeit der Versuch einer Verbindungsherstellung bei sofortiger Besetztsignalisierung von vorne herein unterbunden wird.

2. Verfahren nach Anspruch 1,
**dadurch gekennzeichnet,**
daß in den Fällen, in denen entweder bei einer aktuell bestehenden Gesprächsverbindung diese über eine vorgegebene kurze Zeitspanne hinaus unterbrochen ist oder ein Verbindungsaufbauversuch zu dem betreffenden Mobilendgerät erfolglos ist, von der Systemsteuerung das betreffende Mobilendgerät als nicht erreichbar registriert und somit die mobilendgeräteindividuelle Information entsprechend gesetzt wird.

3. Verfahren nach Anspruch 1 oder 2,
**dadurch gekennzeichnet,**
daß die verbindungsindividuelle Information über die aktuelle Erreichbarkeit in Form eines Erreichbarkeitsbits (ME-A) abgespeichert ist.

4. Verfahren nach Anspruch 2 und 3,
**dadurch gekennzeichnet,**
daß bei Überschreitung der vorgegebenen kurzen Zeitspanne für die entsprechende Gesprächsverbindung eine diese Tatsache kennzeichnende Auslösemeldung generiert wird, durch die die Systemsteuerung veranlaßt wird, die mobildendgeräteindividuelle Erreichbarkeitsinformation zu löschen.

5. Verfahren nach Anspruch 3,
**dadurch gekennzeichnet,**
daß die mobilendgeräteindividuelle Information bei bestehender Erreichbarkeit als entsprechende Bitinformation (ME-A) in einem jeden Mobilendgerät (ME1...MEn) individuell zugeordneten Speicherplatz einer dynamischen Datenbasis (A) abgespeichert ist.

6. Verfahren nach einem der vorhergehenden Ansprüche,
**dadurch gekennzeichnet,**
daß in den Fällen, in denen für ein angefordertes als Besetzt gekennzeichnetes Mobilendgerät durch den rufenden Teilnehmer ein Rückrufauftrag veranlaßt wird, dieser Auftrag durch die Systemsteuerung als ein Rückrufauftrag im Freifall gewertet wird, so daß dieser Rückruf nach einer vom ursprünglich angeforderten Mobilendgerät ausgehenden Aktivität ausgeführt wird.

7. Verfahren nach Anspruch 1,
**dadurch gekennzeichnet,**
daß in den Fällen, in denen mehrere Funkvermittlungseinheiten mit räumlich voneinander getrennten Funkbereichen eingesetzt sind, an die Information über die aktuelle Erreichbarkeit gleichzeitig eine Information über die jeweils örtlich zuständige Funkvermittlungseinheit gekoppelt ist.
